# EUROPEAN PATENT APPLICATION

(11) **EP 4 783 586 A1**
(43) Date of publication of application: **29.07.2026**
(21) Application number: 24868841.8
(22) Date of filing: 23.09.2024
(51) Int. Cl.: H04N 21/2187, H04N 21/431, H04L 65/4038, H04N 21/4788

(54) **METHOD AND APPARATUS FOR LIVE-STREAMING INTERACTION, AND DEVICE AND STORAGE MEDIUM**

(30) Priority: 22.09.2023 CN 202311241684
(71) Applicant: Lemon Inc., Grand Cayman, KY1-1205 (KY)
(72) Inventor: DONG, Shiwei, Beijing 100028 (CN); LI, Rui, Beijing 100028 (CN)
(74) Representative: Grünecker Patent- und Rechtsanwälte PartG mbB
(86) International application number: PCT/SG2024/050609
(87) International publication number: WO 2025/063902

(57) **Abstract**

According to embodiments of the disclosure, a method, apparatus, device and a storage medium of live streaming interaction is provided. The method includes: presenting a live streaming interface of a live streaming room, the live streaming interface including a plurality of content areas, the plurality of content areas corresponding to a plurality of participants of a live streaming event associated with the live streaming room; and presenting interaction information in association with a target content area in the plurality of content areas, the interaction information at least indicating a completion status of an interaction objective of a target participant corresponding to the target content area within a target time period, wherein the target time period and/or the interaction objective are determined based on configuration information of the live streaming room, and the interaction information is updated based on an interaction operation associated with the target participant. Therefore, the interaction information of the target user may be presented in the target content area, and the user wtaching the live streaming room, the live streamer and a plurlaity of participants participating in the live streaming event may conveniently and quickly obtain the interaction information of the target user, thereby improving the interaction experience of the live streaming room.

## Description

This application claims priority to Chinese Patent Application No. 202311241684.X, entitled "METHOD, APPARATUS, DEVICE AND STORAGE MEDIUM OF LIVE STREAMING INTERACTION", filed on September 22, 2023, the entire content of which is incorporated herein by reference.

### FIELD

Example embodiments of the present disclosure generally relate to the field of computers, and in particular, to a method, apparatus, device and computer readable storage medium of live streaming interaction.

### BACKGROUND

With the development of computer technologies, more and more applications can provide live streaming functions. During the live streaming process, the live steamer user may interact with the audience user, which may attract more audience users, and improve the live streaming experience of the audience. For example, some live streaming rooms may create an interaction event (for example, a co-streaming event activity of a live streaming room), and a user may participate in an interaction event initiated by a live streamer. The live streamer may configure the interaction events in the live streaming room, the live streamer, the participants participating in the interaction event, and other users watching the live streaming room may perform audio and video interaction in the live streaming room.

### SUMMARY

In a first aspect of the present disclosure, a method of live streaming interaction is provided. The method includes: presenting a live streaming interface of a live streaming room, the live streaming interface including a plurality of content areas, the plurality of content areas corresponding to a plurality of participants of a live streaming event associated with the live streaming room; and presenting interaction information in association with a target content area in the plurality of content areas, the interaction information at least indicating a completion status of an interaction objective of a target participant corresponding to the target content area within a target time period, wherein the target time period and/or the interaction objective are determined based on configuration information of the live streaming room, and the interaction information is updated based on an interaction operation associated with the target participant.

In a second aspect of the present disclosure, an apparatus for live streaming interaction is provided. The apparatus includes: an interface presenting module, configured to present a live streaming interface of a live streaming room, the live streaming interface including a plurality of content areas, the plurality of content areas corresponding to a plurality of participants of a live streaming event associated with the live streaming room; and an information presenting module, configured to present interaction information in association with a target content area in the plurality of content areas, the interaction information at least indicating a completion status of an interaction objective of a target participant corresponding to the target content area within a target time period, wherein the target time period and/or the interaction objective are determined based on configuration information of the live streaming room, and the interaction information is updated based on an interaction operation associated with the target participant.

In a third aspect of the present disclosure, an electronic device is provided. The device includes at least one processing unit; and at least one memory coupled to the at least one processing unit and storing instructions for execution by the at least one processing unit. The instructions, when executed by the at least one processing unit, cause the device to perform the method of the first aspect.

In a fourth aspect of the present disclosure, a computer-readable storage medium is provided. The computer-readable storage medium stores a computer program, the computer program when executable by a processor, implements the method of the first aspect.

It should be understood that the content described in this content section is not intended to limit the key features or important features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in connection with the accompanying drawings. In the drawings, the same or similar reference numbers refer to the same or similar elements, wherein:
FIG. 1 illustrates a schematic diagram of an example environment in which embodiments of the present disclosure can be implemented;
FIG. 2A to FIG. 2I are schematic diagrams of a plurality of example interfaces of a live streaming room according to some embodiments of the present disclosure;
FIG. 3 illustrates a flowchart of a process for live streaming interaction according to some embodiments of the present disclosure;
FIG. 4 illustrates a block diagram of an apparatus for live streaming interaction according to some embodiments of the present disclosure; and
FIG. 5 illustrates a block diagram of an electronic device capable of implementing various embodiments of the present disclosure.

### DETAILED DESCRIPTION

It can be understood that, before the technical solutions disclosed in the embodiments of the present disclosure are used, the types, the usage scope, the usage scenario and the like of personal information related to the present disclosure should be notified to the user in an appropriate manner according to the relevant laws and regulations and obtain the authorization of the user.

For example, in response to receiving an active request from a user, prompt information is sent to the user to explicitly prompt the user that the requested operation will need to acquire and use the personal information of the user. Therefore, the user can autonomously select whether to provide personal information to software or hardware such as electronic device, application program, server or storage medium, etc. executing the operation of the technical solution of the present disclosure according to the prompt information.

As an optional but non-limiting implementation, in response to receiving the active request of the user, the manner of sending the prompt information to the user may be, for example, a pop-up window, and the pop-up window may present the prompt information in a text manner. In addition, the pop-up window may further carry a selection control for the user to select "agree" or "not agree" to provide personal information to the electronic device.

It may be understood that the foregoing notification and obtaining a user authorization process is merely illustrative, and does not constitute a limitation on implementations of the present disclosure, and other manners of meeting related laws and regulations may also be applied to implementations of the present disclosure.

It may be understood that the data involved in the technical solution (including but not limited to the data itself, the acquisition or use of the data) should follow the requirements of the corresponding laws and regulations and related regulations.

The term "in response to" as used herein means a state in which a respective event occurs, or condition is satisfied. It will be appreciated that the timing of execution of a subsequent action performed in response to the event or condition is not necessarily strongly correlated with the time at which the event occurs, or the condition holds. For example, in some situations, subsequent actions may be performed immediately when an event occurs or a condition is held; while in other situations, subsequent actions may be performed after a period of time elapses after an event occurs, or a condition holds.

Embodiments of the present disclosure will be described in more detail below with reference to the accompanying drawings. While certain embodiments of the present disclosure are shown in the accompanying drawings, it should be understood that the present disclosure may be implemented in various forms, and should not be construed as limited to the embodiments set forth herein, but rather, these embodiments are provided for a more thorough and complete understanding of the present disclosure. It should be understood that the drawings and embodiments of the present disclosure are for illustrative purposes only and are not intended to limit the scope of the present disclosure.

It should be noted that the title of any section/subsection provided herein is not limiting. Various embodiments are described throughout, and any type of embodiments may be included in any section/subsection. Furthermore, the embodiments described in any section/subsection may be combined in any manner with the same section/subsection and/or any other embodiments described in different sections/subsections.

In the description of the embodiments of the present disclosure, the terms "including" and the like should be understood to include "including but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definitions may also be included below. The terms "first," "second," and the like may refer to different or identical objects. Other explicit and implicit definitions may also be included below.

As briefly mentioned above, some live streaming rooms may create live streaming events (also referred to as interaction events). The live streaming event may be, for example, a co-streaming activity of the live streaming room. The user may participate in a live streaming event initiated by the live streamer. The live streamer may configure the live streaming event in the live streaming room, the live streamer, the participant participating in the live streaming event, and other users watching the live streaming room may perform audio and video interactions in the live streaming room.

Some conventional solutions may support a liver streamer to invite a plurality of users for providing a co-streaming interaction, for example, a liver streamer invites a plurality of users to participate in a co-streaming interaction and organize the plurality of users participating in the interaction in turn for performance. However, the live streamer and the plurality of users participating in the interaction are all limited by the online participation, it is difficult for the liver streamer to control the situation, and the performance order, the performance duration, and the like of the plurality of users participating in the interaction are difficult to arrange. This increases the management cost of live streaming events and may affect the user's experience in participating in the live streaming event.

Therefore, embodiments of the present disclosure provide a solution for live streaming interaction. According to various embodiments of the present disclosure, a live streaming interface of a live streaming room is presented, the live streaming interface includes a plurality of content areas, the plurality of content areas corresponds to a plurality of participants of a live streaming event associated with the live streaming room. Interaction information is presented in association with a target content area in the plurality of content areas. The interaction information at least indicates a completion status of an interaction objective of a target participant corresponding to the target content area within a target time period, wherein the target time period and/or the interaction objective are determined based on configuration information of the live streaming room, and the interaction information is updated based on an interaction operation associated with the target participant.

In this way, according to the embodiments of the present disclosure, the interaction information of the target user may be presented in the target content area corresponding to the target user, and the user of the live streaming room, the live streamer, and the plurality of participants participating in the live streaming event may conveniently and quickly obtain the interaction information of the target user, which may improve the interaction experience of the live streaming room.

Example embodiments of the present disclosure are described below with reference to the accompanying drawings.

### EXAMPLE ENVIRONMENT

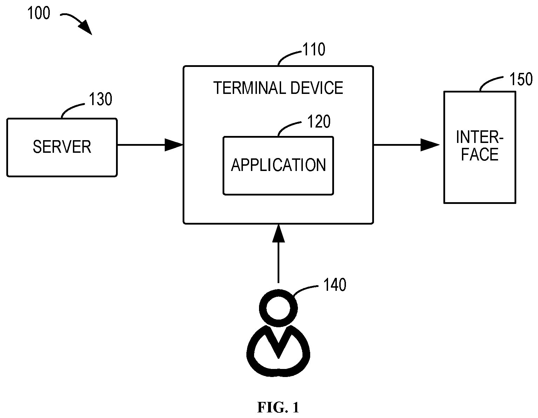

FIG. 1 illustrates a schematic diagram of an example environment 100 in which embodiments of the present disclosure can be implemented. As shown in FIG. 1, the example environment 100 may include a terminal device 110.

In this example environment 100, the terminal device 110 may be run with an application 120 for providing and watching a live stream. The application 120 may be any suitable type of application for providing and watching the live stream, examples of which may include, but are not limited to: online video applications, live streaming applications. The user 140 may interact with the application 120 via the terminal device 110 and/or its attachment device. The user 140 may include an appropriate user of the live streaming room, for example, a live streamer user of the live streaming room (which may also be referred to as a live streaming party or a manager), an audience user of the live streaming room, a listener user, a viewer or a participant, and the like.

In the environment 100 of FIG. 1, if the application 120 is active, the terminal device 110 may present the live streaming interface 150 through the application 120.

In some embodiments, terminal device 110 communicates with server 130 to enable provisioning of services to application 120. The server 150 may provide functions such as management, configuration, and maintenance of applications or websites.

The terminal device 110 may be any type of mobile terminal, a fixed terminal, or a portable terminal, including a mobile phone, a desktop computer, a laptop computer, a notebook computer, a netbook computer, a tablet computer, a media computer, a multimedia tablet, a palmtop computer, a portable game terminal, a VR/AR device, a personal communication system (PCS) device, a personal navigation device, a personal digital assistant (PDA), an audio/video player, a digital camera/camcorder, a positioning device, a television receiver, a radio broadcast receiver, an electronic book device, a game device, or any combination thereof, including accessories and peripherals of these devices, or any combination thereof. In some embodiments, the terminal device 110 may also support any type of interface for a user (such as a "wearable" circuit, etc.).

The server 130 may be a standalone physical server, a server cluster composed of a plurality of physical servers, or a distributed system, or may be a cloud server that provides basic cloud computing services such as cloud services, cloud databases, cloud computing, cloud functions, cloud storage, network services, cloud communications, middleware services, domain name services, security services, content distribution networks, and big data and artificial intelligence platforms. The server 130 may include, for example, a computing system/server, such as a mainframe, an edge computing node, a computing device in a cloud environment, or the like. The server 130 may provide a background service for the application 120 that supports the virtual scene in the terminal device 110.

A communication connection may be established between the server 130 and the terminal device 110. The communication connection may be established in a wired manner or a wireless manner. The communication connection may include, but is not limited to, a Bluetooth connection, a mobile network connection, a Universal Serial Bus (USB) connection, a Wireless Fidelity (WiFi) connection, and the like, and the embodiments of the present disclosure are not limited in this aspect. In an embodiment of the present disclosure, the server 130 and the terminal device 110 may implement signaling interaction by using a communication connection between the server 130 and the terminal device 110.

It should be understood that the structures and functions of the various elements in the environment 100 are described for illustrative purposes only and do not imply any limitation to the scope of the present disclosure.

Various example implementations of the present disclosure will be described in detail below.

### EXAMPLE LIVE STREAMING INTERACTION

According to embodiments of the present disclosure, a method of live streaming interaction is provided. According to the method, a live streaming interface of a live streaming room is presented, the live streaming interface includes a plurality of content areas, the plurality of content areas corresponds to a plurality of participants of a live streaming event associated with the live streaming room. Furthermore, interaction information is presented in association with a target content area in the plurality of content areas, the interaction information at least indicates a completion status of an interaction objective of a target participant corresponding to the target content area within a target time period, wherein the target time period and/or the interaction objective are determined based on configuration information of the live streaming room, and the interaction information is updated based on an interaction operation associated with the target participant.

Such a method of live streaming interaction may be implemented by a suitable electronic device or combination of electronic devices (e.g., terminal device 110, server 130, or a combination of one or more of these devices in FIG. 1).

As will be described in detail below, the terminal device 110 may present a live streaming interface of the live streaming room. The live streaming interface includes a plurality of content areas corresponding to a plurality of participants of a live streaming event associated with the live streaming room.

For example, the terminal device 120 may obtain configuration information about the live streaming room input by the user 110, and such configuration information may include, for example, text content or other appropriate content. Such configuration information may be obtained by the terminal device 120 in a plurality of manners such as an operation control and an input portal in the live streaming room.

Further, the terminal device 120 determines a target time period and/or an interaction objective associated with the target participant based on the configuration information. The terminal device 120 further presents the interaction information in association with the target content area of the plurality of content areas based on the target time period and/or the interaction objective. The interaction information at least indicates a completion status of an interaction objective of a target participant corresponding to the target content area within the target time period. The interaction information is updated based on an interaction operation associated with the target participant. For example, the terminal devices corresponding to other users (including a set of users participating in the interaction event and other users watching the live streaming room) in the live streaming room may also correspondingly start the interaction content in the corresponding live streaming interface.

In some embodiments, the live streaming event associated with the live streaming room may be any online activity allowed within the live streaming room, such as singing, dancing, storytelling, chatting, gaming, and the like. For example, the live streaming event may be, for example, a co-streaming event associated with a plurality of participants. The user participating in the live streaming event may, for example, be allowed to enable a co-streaming permission or a video permission in the live streaming room for audio sharing and/or video sharing. The live streamer of the live streaming room may configure the live streaming room, for example, configure the number of users of the plurality of participants participating in the live streaming event, an interaction duration of each participant in the plurality of participants, and the like. The terminal device of the live streamer starts the live streaming event associated with the live streaming room according to the configuration information of the live streamer. It should be noted that, if the terminal device 110 corresponds to the live streamer of the live streaming event, the live streaming event associated with the live streaming room herein may be started by the terminal device 110 manually indicated by the liver streamer after the live streamer determines that a configuration for the configuration information is completed, or may be started autonomously by the terminal device 110 in response to the configuration of the configuration information being completed.

In this way, the embodiments of the present disclosure can support a plurality of users to participate in a live streaming event associated with a live streaming room together, such that the enthusiasm for interactions among users in the live streaming room can be improved, and the interaction experience of the users can be improved.

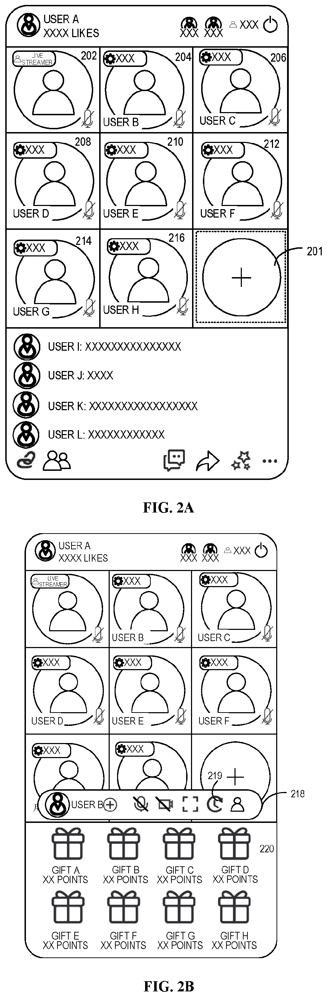

An example live streaming interface according to some embodiments of the present disclosure will be described below in connection with FIGS. 2A-2I. The following uses such a live streaming interface which corresponds to the live streamer of the live streaming room as an example for illustrative description. FIG. 2A to FIG. 2I show schematic diagrams of a plurality of example interfaces of a live streaming room according to some embodiments of the present disclosure.

In some embodiments, after the live streamer of the live streaming room creates the live streaming event, a plurality of users may be invited to participate in the live streaming event. Certainly, the plurality of users participating in the live streaming event (that is, the plurality of participants) may further include a user actively requesting to join the live streaming event. The live streaming room may present a user identifier (including a user avatar, a user account name, etc.) of each user in a set of users participating in the live streaming event. As shown in FIG. 2A, the terminal device 120 may, for example, provide the user 110 with a live streaming interface including user identifiers of a plurality of participants participating in the live streaming event. The live streaming interface includes an invitation control 201 for inviting a user to participate in a live streaming event. In some embodiments, the live streaming interface may further include other controls for interactions of the live streaming room, including but not limited to a gift giving control, a sharing control, a comment control, and the like. In some embodiments, the live streaming interface further includes a comment area for displaying user comments.

The live streaming interface as shown in FIG. 2A includes a plurality of content areas corresponding to a plurality of participants of a live streaming event associated with a live streaming room. For example, if user A is a live streamer of a live streaming event, user B to user H are a plurality of participants participating in a live streaming event, and the live streaming interface shown in FIG. 2A includes a content area 204 corresponding to user B, a content area 206 corresponding to user C, a content area 208 corresponding to user D, a content area 210 corresponding to user E, a content area 212 corresponding to user F, and a content area 214 corresponding to user G, and a content area 216 corresponding to user H. It may be understood that the live streaming interface shown in FIG. 2A may further include a content area 202 corresponding to a live streamer (that is, user A). It should be understood that the live streaming interface shown in FIG. 2A is merely an example, and the live streaming interface may further include more or less controls and content areas, which is not limited to the embodiments of the present disclosure.

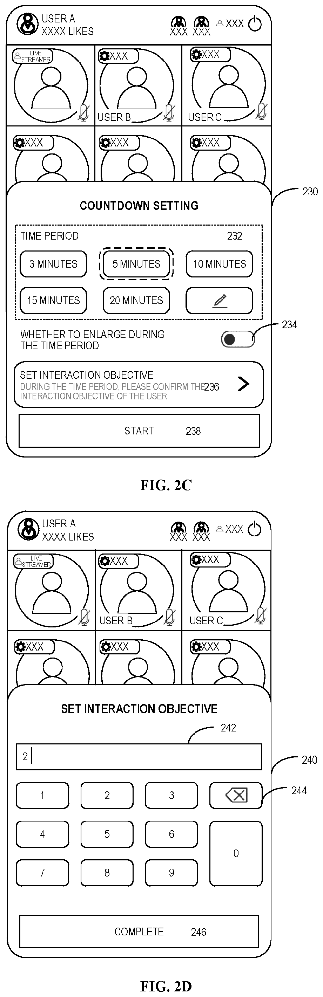

In some embodiments, the terminal device 110 may present a menu bar 218 and a gift giving area 220 as shown in FIG. 2B in response to receiving a selection operation (including but not limited to a click operation, a long-press operation, a slide operation, a double-click operation, etc.) associated with a target content area (e.g., the content area 204) of the plurality of content areas. The gift giving area 220 presents a plurality of gifts, and in response to detecting a selection operation on any of the plurality of gifts, the gift may be given to the target participant to increase an interaction value (for example, a point value, a popularity value, etc.) of the target participant. The menu bar 218 may be located at any position of the live streaming interface, for example, an upper side and a lower side of the live streaming interface. The menu bar 218 may also be in any style, for example, a horizontal menu bar as shown in FIG. 2B, or a vertical menu bar. The menu bar 218 includes an identifier (for example, an avatar and a name of user B) of a target participant (that is, user B) corresponding to the target content area and at least one operation control for the target participant. The at least one operation control for the target participant includes at least an operation control 219 for setting a target time period for the target participant. For ease of description, when described below with reference to FIG. 2C to FIG. 2I, the target participant and the user B refer to the same user, and the live streamer and the user A refer to the same user.

In response to detecting a selection operation on the operation control 219, the terminal device 110 provides a configuration interface 230 associated with the target participant to the live streamer as shown in FIG. 2C. That is, the terminal device 110 is a terminal device corresponding to the live streamer. As shown in FIG. 2C, the terminal device 110 may present a first control for setting the target time period in a time period configuration area 232. The first control may include, for example, examples of a set of time periods. The terminal device 110 may determine a target time period corresponding to the target participant in response to detecting a selection on a certain time period of the set of time periods presented on the first control by the live streamer. The first control may also include, for example, a custom control. The terminal device 110 may receive a user input from the live streamer in response to detecting a selection operation of the live streamer on the custom control, and determine the target time period corresponding to the target participant indicated by the user input.

The target time period may be, for example, the longest time that the target participant is allowed to be an active participant. It may be understood that a plurality of participants participating in a live streaming event usually performs live streaming interactions with the audience users in turns, and a participant performing live streaming interactions is authorized with a predetermined permission (for example, a co-streaming permission or a video sharing permission) during the interaction, and such a participant may be referred to as an active participant. It may be understood that a plurality of participants participating in the live streaming event become active participants during the live streaming event in turns. It should be noted that during the live streaming event, for the same participant, it may become an active participant for a plurality of times. For example, the live streamer may determine, based on the foregoing manner, the longest time that the participant becomes an active participant each time. For example, the live streamer may also configure the longest time (for example, 5 minutes) corresponding the a participant for being the active participant before the participant becomes the active participant for the first time, and the longest time for the participant to become the active participant for each subsequent time is also the longest time (that is, the longest time for becoming the active participant for each subsequent times is also 5 minutes by default).

For example, as shown in FIG. 2C, the terminal device 110 may determine, in response to receiving a selection operation on an example corresponding to "5 minutes" by the live streamer, that the target time period allowed for the user B as the active participant is 5 minutes.

In some embodiments, as shown in FIG. 2C, the configuration interface 230 may further include a control 236 (which may also be referred to as a second control) for setting an interaction objective, for example. In response to detecting a selection operation on the control 236, the terminal device 110 presents a target setting interface 240 as shown in FIG. 2D. As shown in FIG. 2D, the target setting interface 240 includes an input box 242 and at least one numerical control. The terminal device 110 may present, in the input box 242, a value corresponding to the control (that is, the number "2" is presented in the input box 242) in response to receiving a selection operation on any numerical control in the at least one numerical control (for example, a selection operation on the numerical control "2"). The target setting interface 240 may further include a deletion control 244. The terminal device 110 may delete the value presented in the input box 242 in response to detecting a selection operation on the deletion control 244. The target setting interface 240 may also include, for example, a completion control 246. In response to detecting a selection operation on the completion control 246, the terminal device 110 determines the value presented in the input box 242 as an interaction objective of the target participant during the target time period. The interaction objective may be a target interaction value set by the live streamer for the target participant and expected to be reached by the target participant in the target time period. In response to determining the interaction objective, the terminal device 110 switches back to presenting the configuration interface 230 shown in FIG. 2C.

The configuration interface 230 may further include a control 234 (which may also be referred to as a third control) for indicating whether the target content area is highlighted in the live streaming interface during the target time period. The terminal device 110 may determine, in response to receiving a selection operation on the control 234, whether the selection operation indicates that the target content area is highlighted. If the selection operation indicates that the target content area is highlighted, the terminal device 110 perform operations such as highlighting, enlarging the size, adding the border, adjusting the position, and the like to the target content area, to highlight the target content area. If the selection operation indicates that the target content area is not highlighted, the terminal device 110 may not process the target content area. In some embodiments, the control 234 may indicate not to highlight the target content area by default. In this situation, the terminal device 110 may determine, in response to detecting the selection operation on the control 234, that the control 234 indicates that the target content area is to be highlighted in the live streaming interface.

Based on the foregoing manner, the terminal device 110 may determine a target time period, an interaction objective, and a configuration of whether to highlight the target content area for the target participant. It should be noted that the implementation of the interaction objective and whether the target content area is highlighted herein depends on the configuration of the target time period. That is, only if the target time period is configured, the terminal device 110 determines its interaction objective and whether to highlight the target content area during the target time period. It can be understood that, for the above configuration of the target time period, the interaction objective and whether the target content area is highlighted, four situations where only the configuration of the target time period is present, only the configuration for the target time period and whether the target content area is highlighted is present, only the configuration for the target time period and the interaction objective is present, and corresponding configurations for all three are present, may exist.

The configuration interface 230 may also include a start control 238. In response to detecting the selection operation on the start control 238, the terminal device 110 obtains configuration information input by the live streamer via the configuration interface 230, and adjusts the live streaming interface, determines the target time period, and/or determines the interaction objective based on the configuration information. It should be noted that, in response to the target participant being configured with the target time period, the terminal device 110 may determine the target participant as the active participant. Since a situation, where an active participant is currently present and the active participant is other users other than the target participant, may be present, in this situation, the terminal device 110 may determine the target participant as the next active participant after the current active participant. It may be understood that, if there is no active participant currently, the terminal device 110 may directly determine the target participant as the active participant.

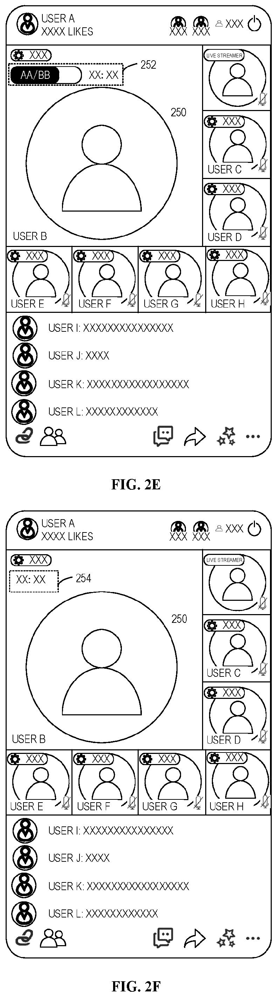

For example, in a situation where the live streamer inputs the configuration for the target time period, the interaction objective, and the whether to highlight the target content area for the target participant via the configuration interface, the terminal device 110 may present a live streaming interface as shown in FIG. 2E. Compared with the live streaming interface shown in FIG. 2A, the live streaming interface shown in FIG. 2E is a live streaming interface highlighting the target content area. As shown in FIG. 2E, the user B is the target participant, and the content area 250 corresponding to the user B is the highlighted target content area.

The terminal device 110 may be associated with the target content area (i.e., the content area 250) to present the interaction information 252. The interaction information 252 may, for example, be present anywhere in the content area 250, e.g., the top left corner of the content area as shown in FIG. 2E. The interaction information 252 at least indicates a completion status of an interaction objective of the target participant corresponding to the target content area during the target time period. In some embodiments, the interaction information 252 may indicate a completion status of the interaction objective of the target participant corresponding to the target content area during the target time period by indicating a comparison between a current interaction value associated with the target participant and the interaction objective. The current interaction value is used to indicate a set of interaction operations occurring within the target time period and associated with the target participant. The set of interaction operations may include appropriate interaction operations that occur for the target participant in the live streaming room. For example, operations such as gift giving, liking, reposting, commenting, favoriting and the like for the target participant may be included. The interaction value herein may be, for example, a point value corresponding to the interaction operation. For example, for the target participant, the point value corresponding to the target participant may be, for example, a total point value accumulated by the gifts given to the target participant by a set of users watching the live streaming room.

For example, the interaction information 252 may include, for example, a progress bar, and the progress bar may indicate a comparison between a current interaction value associated with the target participant and the interaction objective. As shown in FIG. 2E, the value "AA" indicated by the progress bar is the current interaction value of the target participant, and the value "BB" is the interaction objective. The area of the full progress bar occupied by the dark area in the progress bar may indicate the completion status of the interaction objective of the target participant during the target time period.

For example, the interaction information 252 may further include time information (for example, the time information "XX: XX" shown in FIG. 2E) of the target time period associated with the target participant, and the time information indicates a first duration that the target time period has elapsed and/or a remaining second duration. For example, if the target time period is 5 minutes, and the first duration that the target time period has elapsed is 1 minutes, the time information "XX: XX" shown in FIG. 2E may be the first duration "01: 00" or the second duration "04: 00".

Similarly, in the situation where the live streamer inputs, via the configuration interface, the configuration for the target time period for the target participant and whether to highlight of the target content area (that is, the interaction objective is not configured), the terminal device 110 may present the live streaming interface shown in FIG. 2F. Compared with the live streaming interface shown in FIG. 2A, the live streaming interface shown in FIG. 2F is also a live streaming interface highlighting the target content area. As shown in FIG. 2F, the user B is the target participant, and the content area 250 corresponding to the user B is the highlighted target content area. The target area includes the interaction information 254. The interaction information 254 is interaction information including only time information about the target time period.

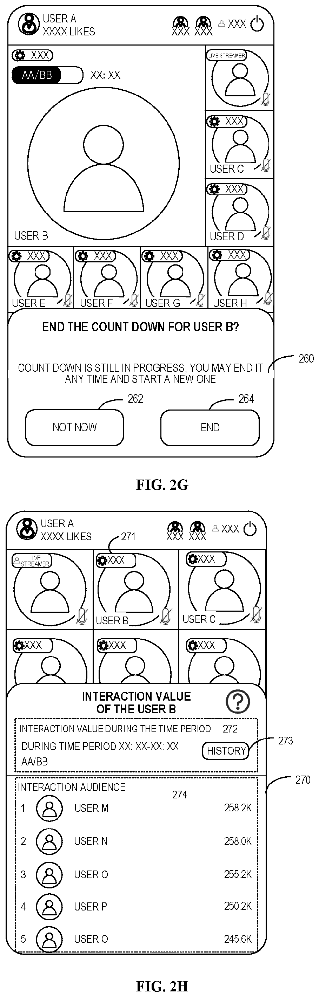

In some embodiments, during the target time period, the terminal device 110 may also receive an exit indication associated with the target participant. The exit indication is used to indicate the terminal device 110 to terminate the target time period in advance, that is, cease to let the target participant to be the active participant in advance. For example, the terminal device 110 may determine, in response to detecting the first predetermined operation on the content area 250 (that is, the target content area), that the exit indication is received, and present the prompt interface 260 shown in FIG. 2G. Here, the first predetermined operation on the content area 250 may be, for example, a selection operation on the content area 250 or a selection operation on an operation control associated with the content area 250. Prompt text may be presented in the prompt interface 260, for example, the text "countdown is still in progress, you may end it any time and start a new one.". The prompt text is used to prompt the user that the current target time period has not ended. The terminal device 110 further, in response to detecting the selection operation on the control 262, does not terminate the target time period, and continues to display the live streaming interface shown in FIG. 2E or the live streaming interface shown in FIG. 2F. The terminal device 110 terminates the target time period in response to detecting a selection operation on the control 264.

In a situation where the target time period is not terminated in advance, that is, the target participant normally performs the live streaming interactions during the target time period, the terminal device 110 may further highlight, in a predetermined phase of the target time period, at least part of the interaction information in the live streaming interface (for example, the live streaming interface shown in FIG. 2E or the live streaming interface shown in FIG. 2F). The predetermined stage herein may be, for example, a stage in which the target time period is about to end. For example, the last 10 seconds of the target time period may be determined as the predetermined phase. The terminal device 110 may highlight at least part of the interaction information (for example, the progress bar and the time information shown in FIG. 2E) in the last 10 seconds of the target time period. For example, the terminal device 110 may highlight at least part of the interaction information by enlarging at least part of the interaction information, highlighting at least part of the interaction information, presenting an effect, and the like. Therefore, the users (including the live streamer, the participant, and the audience user) in the live streaming event may be prompted to prompt that the target time period corresponding to the target participant is about to end.

In some embodiments, in response to an end of the target time period, the terminal device 110 may update the target content area to indicate whether the interaction objective is achieved. For example, the terminal device 110 may present an indicator in the target content area to indicate whether the interaction objective is achieved. The indicator may be any appropriate text, pattern, image, animation, or the like. For example, in a situation where the target time period ends, if the interaction objective is achieved, the terminal device 110 may present the text "achieved" in the target content area, and if the interaction objective is not achieved, the text "not achieved" may be presented in the target content area.

For example, the terminal device 110 may further display the interaction information based on an updated style, where the updated style is determined based on whether the interaction objective is achieved. For example, the terminal device 110 may update the display style of the interaction information, for example, the terminal device 110 may update the display style of the interaction information to be the text "achieved" or "not achieved". The terminal device 110 updates the display style of the interaction information to the text "achieved" or "not achieved" based on the achievement status of the interaction objective.

In some embodiments, in response to an end of the target time period and the target participant achieving the interaction objective, the terminal device 110 may further extend the target time period based on the configuration operation of the live streamer, such that the target participant may continue to be the active participant. For example, if the target time period is 5 minutes, if the target participant has completed the interaction objective at the end of the 5 minutes, the terminal device 110 may determine, based on the configuration operation of the live streamer, that the continue instruction associated with the target participant is received, and extend the target time period to extend the target time period to 10 minutes (that is, 5 minutes is newly added to the target time period), such that the target participant may continue to be the active participant until the newly added 5 minute ends. In some embodiments, in response to an end of the target time period, and the target participant does not achieve the interaction objective, the terminal device 110 may control the target participant to exit the live streaming event based on the configuration operation of the live streamer. For example, the terminal device 110 may control the target participant to exit the live streaming event in response to the indication information from the live streamer indicating controlling the target participant to exit the live streaming event. Therefore, the duration of the participant, who is favored by the audience, being the active participant can be extended, and the interaction experience of the user for the live streaming room can be prompted.

In some embodiments, the terminal device 110 may further present, based on a second predetermined operation associated with the target interaction area, an interaction record of the audience associated with the participant. Similarly, the second predetermined operation herein may be, for example, a selection operation on the content area 250 or a selection operation on an operation control associated with the content area 250. For example, as shown in FIG. 2H, the terminal device 110 presents the interaction interface 270 in response to detecting a selection operation on the control 271. The control 271 here may, for example, present point information associated with the participant. It may be understood that, although the interaction interface 270 is an interaction interface corresponding to the user B, the terminal device 110 may present, in response to a selection operation on controls associated with other participants, an interaction interface associated with the participant. The participant here is not limited to the target participant, which may be any participant participating in the live streaming event.

The interaction interface 270 is used to present an interaction record of an audience associated with a participant (e.g., user B). For example, the interaction interface 270 includes an area 274 for presenting an interaction record with the audience of the user B. The area 274 may be presented with an identifier (avatar, name) of the audience, and a point value corresponding to the interaction operation of the audience on the user B (for example, the point value of the interaction operation of the user M on the user B may be, for example, 258.2K).

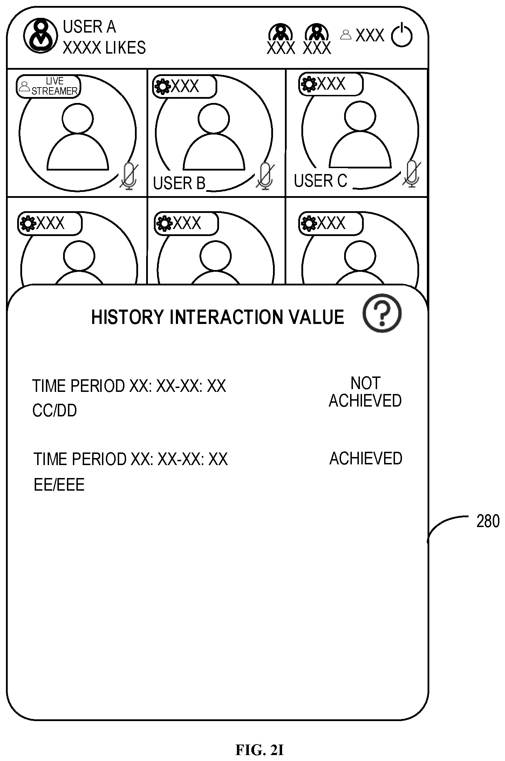

In some embodiments, in a situation where the participant has a historical target time period in the live streaming event (that is, having become an active participant in the history), the interaction interface 270 may further include a historical record area 272. The historical record area 272 may be presented with the target time period that the participant has become the target participant for the most recent time or at this time and the completion status for the interaction objective. The historical record area 272 may also include a control 273. In response to receiving the selection operation on the control 273, the terminal device 110 presents the historical record interface 280 shown in FIG. 2I. The historical record interface 280 is configured to present a historical target time period of the participant in the current live streaming event and a completion status of the historical interaction objective corresponding to the historical target time period.

In summary, according to the embodiments of the present disclosure, the interaction information of the target user may be presented in the target content area corresponding to the target user, and the user of the live streaming room, the live streamer, and the plurality of participants participating in the live streaming event may conveniently and quickly obtain the interaction information of the target user, which may improve the interaction experience of the live streaming room.

### EXAMPLE PROCESSES

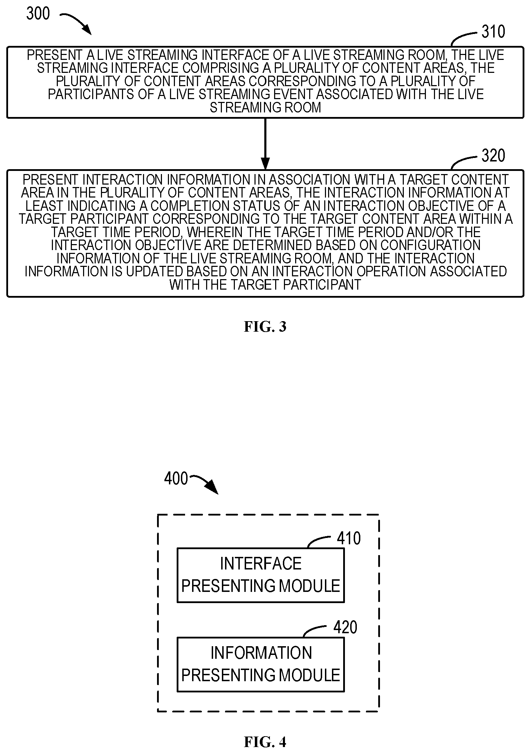

FIG. 3 illustrates a flowchart of an example process 300 of live streaming interaction in accordance with some embodiments of the present disclosure. Process 300 may be implemented at terminal device 110. The process 300 is described below with reference to FIG. 1.

As shown in FIG. 3, at block 310, the terminal device 110 presents a live streaming interface of a live streaming room, the live streaming interface including a plurality of content areas, the plurality of content areas corresponding to a plurality of participants of a live streaming event associated with the live streaming room.

At block 320, the terminal device 110 presents interaction information in association with a target content area in the plurality of content areas, the interaction information at least indicating a completion status of an interaction objective of a target participant corresponding to the target content area within a target time period, wherein the target time period and/or the interaction objective are determined based on configuration information of the live streaming room, and the interaction information is updated based on an interaction operation associated with the target participant.

In some embodiments, the interaction information indicates a comparison between a current interaction value associated with the target participant and the interaction objective, and the current interaction value is used to indicate a set of interaction operations associated with the target participant and occurred during the target time period.

In some embodiments, the interaction information further includes time information about the target time period, and the time information indicates a first duration that the target time period has elapsed and/or a remaining second duration of the target time period.

In some embodiments, the process 300 further includes updating, in response to an end of the target time period, the target content area to indicate whether the interaction objective is achieved.

In some embodiments, updating the target content area includes: presenting an indicator in the target content area to indicate whether the interaction objective is achieved; and/or displaying the interaction information based on an updated style, the updated style being determined based on whether the interaction objective is achieved.

In some embodiments, the process 300 further includes: highlighting, at a predetermined stage of the target time period, at least part of the interaction information in the live streaming interface.

In some embodiments, the process 300 further includes: ceasing to present the interaction information based on an exit indication associated with the target participant, wherein the exit indication is generated based on a first predetermined operation of a live streamer of the live streaming room.

In some embodiments, the live streaming interface corresponds to a live streamer of the live streaming room, and the process 300 further includes: providing, to the live streamer, a configuration interface associated with the target participant; and obtaining, via the configuration interface, the configuration information input by the live streamer.

In some embodiments, the configuration interface includes: a first control for setting the target time period; and/or a second control for setting the interaction objective.

In some embodiments, the configuration interface further includes: a third control for setting whether the target content area is highlighted in a live streaming program during the target time period.

In some embodiments, the process 300 further includes: presenting, based on a second predetermined operation associated with the target content area, historical interaction information associated with the target participant, the historical interaction information at least indicating a completion status of a historical interaction objective of the target participant in at least one historical time period.

In some embodiments, the process 300 further includes: extending, in response to the interaction objective being completed by the target participant within the target time period, a length of the target time period to cause the target participant to continue being an active user of the live streaming event.

In some embodiments, extending the length of the target time period includes: extending the length of the target time period based on first indication information from a live streamer of the live streaming room.

In some embodiments, the process 300 further includes: controlling, in response to the interaction objective being uncompleted by the target participant within the target time period, the target participant to exit the live streaming event.

In some embodiments, controlling the target participant to exit the live streaming event includes: controlling, based on second indication information from a live streamer of the live streaming room, the target participant to exit the live streaming event.

In some embodiments, the live streaming event includes a co-streaming event associated with the plurality of participants.

### EXAMPLE APPARATUS AND DEVICE

Embodiments of the present disclosure also provide a corresponding apparatus for implementing the above method or process. FIG. 4 shows a schematic structural block diagram of an apparatus 400 for live streaming interaction according to some embodiments of the present disclosure. The apparatus 400 may be implemented or included in the terminal device 110. The various modules/components in the apparatus 400 may be implemented by hardware, software, firmware, or any combination thereof.

As shown in FIG. 4, the apparatus 400 includes an interface presenting module 410 configured to configured to present a live streaming interface of a live streaming room, the live streaming interface including a plurality of content areas, the plurality of content areas corresponding to a plurality of participants of a live streaming event associated with the live streaming room. The apparatus 400 further includes an information presenting module 420, configured to present interaction information in association with a target content area in the plurality of content areas, the interaction information at least indicating a completion status of an interaction objective of a target participant corresponding to the target content area within a target time period, wherein the target time period and/or the interaction objective are determined based on configuration information of the live streaming room, and the interaction information is updated based on an interaction operation associated with the target participant.

In some embodiments, interaction information indicates a comparison between a current interaction value associated with the target participant and the interaction objective, and the current interaction value is used to indicate a set of interaction operations associated with the target participant and occurred during the target time period.

In some embodiments, the interaction information further includes time information about the target time period, and the time information indicates a first duration that the target time period has elapsed and/or a remaining second duration of the target time period.

In some embodiments, the apparatus 400 further includes an area updating module configured to, update, in response to an end of the target time period, the target content area to indicate whether the interaction objective is achieved.

In some embodiments, the area updating module includes: an indicator presenting module configured to present an indicator in the target content area to indicate whether the interaction objective is achieved; and/or a style updating module configured to display the interaction information based on an updated style, the updated style being determined based on whether the interaction objective is achieved.

In some embodiments, the apparatus 400 further includes: a display module configured to highlight, at a predetermined stage of the target time period, at least part of the interaction information in the live streaming interface.

In some embodiments, the apparatus 400 further includes: a cease presenting module, configured to cease to present the interaction information based on an exit indication associated with the target participant, wherein the exit indication is generated based on a first predetermined operation of a live streamer of the live streaming room.

In some embodiments, the live streaming interface corresponds to a live streamer of the live streaming room , and the apparatus 400 further includes: a configuration interface providing module, configured to provide, to the live streamer, a configuration interface associated with the target participant; and a configuration information obtaining module configured to obtain, via the configuration interface, the configuration information input by the live streamer.

In some embodiments, the configuration interface includes: a first control for setting the target time period; and/or a second control for setting the interaction objective.

In some embodiments, the configuration interface further includes: a third control for setting whether the target content area is highlighted in a live streaming program during the target time period.

In some embodiments, the apparatus 400 further includes: a historical information presenting module, configured to present, based on a second predetermined operation associated with the target content area, historical interaction information associated with the target participant, the historical interaction information at least indicating a completion status of a historical interaction objective of the target participant in at least one historical time period.

In some embodiments, the apparatus 400 further includes: an extending module, configured to extend, in response to the interaction objective being completed by the target participant within the target time period, a length of the target time period to cause the target participant to continue being an active user of the live streaming event.

In some embodiments, the extending module is further configured to extend the length of the target time period based on first indication information from a live streamer of the live streaming room.

In some embodiments, the apparatus 400 further includes an exiting module, configured to control, in response to the interaction objective being uncompleted by the target participant within the target time period, the target participant to exit the live streaming event.

In some embodiments, the exiting module is further configured to control, based on second indication information from a live streamer of the live streaming room, the target participant to exit the live streaming event.

In some embodiments, the live streaming event includes a co-streaming event associated with the plurality of participants.

The units included in the apparatus 400 may be implemented in various manners, including software, hardware, firmware, or any combination thereof. In some embodiments, one or more units may be implemented using software and/or firmware, such as machine-executable instructions stored on a storage medium. In addition to or as an alternative to machine-executable instructions, some or all of the elements in the apparatus 400 may be implemented, at least in part, by one or more hardware logic components. By way of example and not limitation, example types of hardware logic components that may be used include field programmable gate arrays (FPGAs), application specific integrated circuits (ASICs), application specific standards (ASSPs), system-on-a-chip (SOCs), complex programmable logic devices (CPLDs), and the like.

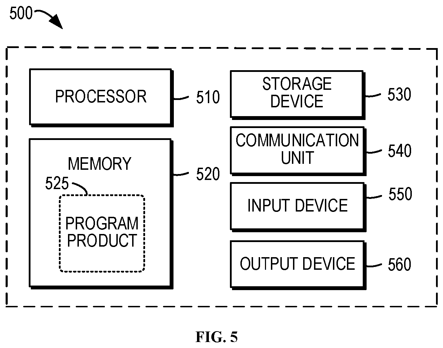

FIG. 5 illustrates a block diagram of an electronic device 500 in which one or more embodiments of the present disclosure may be implemented. It should be understood that the electronic device 500 illustrated in FIG. 5 is merely illustrative and should not constitute any limitation on the functionality and scope of the embodiments described herein. The electronic device 500 shown in FIG. 5 may be configured to implement the electronic device 110 in FIG. 1.

As shown in FIG. 5, the electronic device 500 is in the form of a general-purpose electronic device. Components of the electronic device 500 may include, but are not limited to, one or more processors or processing units 510, a memory 520, a storage device 530, one or more communication units 540, one or more input devices 550, and one or more output devices 560. The processing unit 510 may be an actual or virtual processor and capable of performing various processes according to programs stored in the memory 520. In multiprocessor systems, multiple processing units execute computer-executable instructions in parallel to improve parallel processing capabilities of electronic device 500.

Electronic device 500 typically includes a plurality of computer storage media. Such media may be any available media accessible to the electronic device 500, including, but not limited to, volatile and non-volatile media, removable and non-removable media. The memory 520 may be volatile memory (e.g., registers, caches, random access memory (RAM)), non-volatile memory (e.g., read-only memory (ROM), electrically erasable programmable read-only memory (EEPROM), flash memory), or some combination thereof. Storage device 530 may be a removable or non-removable medium and may include a machine-readable medium, such as a flash drive, magnetic disk, or any other medium, which may be capable of storing information and/or data and may be accessed within electronic device 500.

The electronic device 500 may further include additional removable/non-removable, volatile/non-volatile storage media. Although not shown in FIG. 5, a disk drive for reading or writing from a removable, nonvolatile magnetic disk (e.g., a "floppy disk") and an optical disk drive for reading or writing from a removable, nonvolatile optical disk may be provided. In these cases, each drive may be connected to a bus (not shown) by one or more data media interfaces. The memory 520 may include a computer program product 525 having one or more program modules configured to perform various methods or actions of various embodiments of the present disclosure.

The communication unit 540 is configured to communicate with another electronic device through a communication medium. Additionally, the functionality of components of the electronic device 500 may be implemented in a single computing cluster or multiple computing machines capable of communicating over a communication connection. Thus, the electronic device 500 may operate in a networked environment using logical connections with one or more other servers, network personal computers (PCs), or another network node.

The input device 550 may be one or more input devices, such as a mouse, a keyboard, a trackball, or the like. The output device 560 may be one or more output devices, such as a display, a speaker, a printer, or the like. The electronic device 500 may also communicate with one or more external devices (not shown) through the communication unit 540 as needed, external devices such as storage devices, display devices, etc., communicate with one or more devices that enable a user to interact with the electronic device 500, or communicate with any device (e.g., a network card, a modem, etc.) that enables the electronic device 500 to communicate with one or more other electronic devices. Such communication may be performed via an input/output (I/O) interface (not shown).

According to example implementations of the present disclosure, there is provided a computer-readable storage medium having computer-executable instructions stored thereon, wherein the computer-executable instructions are executed by a processor to implement the method described above. According to example implementations of the present disclosure, a computer program product is further provided, the computer program product being tangibly stored on a non-transitory computer-readable medium and including computer-executable instructions, the computer-executable instructions being executed by a processor to implement the method described above.

Aspects of the present disclosure are described herein with reference to flowcharts and/or block diagrams of methods, apparatuses, devices, and computer program products implemented in accordance with the present disclosure. It should be understood that each block of the flowchart and/or block diagram, and combinations of each block in the flowcharts and/or block diagrams, may be implemented by computer readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce an apparatus to implement the functions/acts specified in one or more blocks in the flowchart and/or block diagram. These computer-readable program instructions may also be stored in a computer-readable storage medium that cause the computer, programmable data processing apparatus, and/or other devices to function in a particular manner, such that the computer-readable medium storing instructions includes an article of manufacture including instructions to implement each aspect of the functions/acts specified in one or more blocks of the flowchart and/or block diagram.

The computer-readable program instructions may be loaded onto a computer, other programmable data processing apparatus, or other devices, such that a series of operational steps are performed on a computer, other programmable data processing apparatus, or other devices to produce a computer-implemented process such that the instructions executed on a computer, other programmable data processing apparatus, or other devices implement the functions/acts specified in one or more blocks the flowchart and/or block diagram.

The flowchart and block diagrams in the figures show architecture, functionality, and operation of possible implementations of systems, methods, and computer program products according to various implementations of the present disclosure. In this regard, each block in the flowchart or block diagram may represent a module, program segment, or portion of an instruction that includes one or more executable instructions for implementing the specified logical function. In some alternative implementations, the functions noted in the blocks may also occur in a different order than noted in the figures. For example, two consecutive blocks may actually be performed substantially in parallel, which may sometimes be performed in the reverse order, depending on the functionality involved. It is also noted that each block in the block diagrams and/or flowchart, as well as combinations of blocks in the block diagrams and/or flowchart, may be implemented with a dedicated hardware-based system that performs the specified functions or actions, or may be implemented in a combination of dedicated hardware and computer instructions.

Various implementations of the present disclosure have been described above, which are illustrative, not exhaustive, and are not limited to the implementations disclosed. Many modifications and variations will be apparent to those of ordinary skill in the art without departing from the scope and spirit of the various implementations illustrated. The selection of the terms used herein is intended to best explain the principles of the implementations, practical applications, or improvements to techniques in the marketplace, or to enable others of ordinary skill in the art to understand the various implementations disclosed herein.

## Claims

1. A method of live streaming interaction comprising
presenting a live streaming interface of a live streaming room, the live streaming interface comprising a plurality of content areas, the plurality of content areas corresponding to a plurality of participants of a live streaming event associated with the live streaming room; and
presenting interaction information in association with a target content area in the plurality of content areas, the interaction information at least indicating a completion status of an interaction objective of a target participant corresponding to the target content area within a target time period, wherein the target time period and/or the interaction objective are determined based on configuration information of the live streaming room, and the interaction information is updated based on an interaction operation associated with the target participant.

2. The method of claim 1, wherein the interaction information indicates a comparison between a current interaction value associated with the target participant and the interaction objective, and the current interaction value is used to indicate a set of interaction operations associated with the target participant and occurred during the target time period.

3. The method of claim 1, wherein the interaction information further comprises time information about the target time period, and the time information indicates a first duration that the target time period has elapsed and/or a remaining second duration of the target time period.

4. The method of claim 1, further comprising:
updating, in response to an end of the target time period, the target content area to indicate whether the interaction objective is achieved.

5. The method of claim 4, wherein updating the target content area comprises:
presenting an indicator in the target content area to indicate whether the interaction objective is achieved; and/or
displaying the interaction information based on an updated style, the updated style being determined based on whether the interaction objective is achieved.

6. The method of claim 1, further comprising:
highlighting, at a predetermined stage of the target time period, at least part of the interaction information in the live streaming interface.

7. The method of claim 1, further comprising:
ceasing to present the interaction information based on an exit indication associated with the target participant, wherein the exit indication is generated based on a first predetermined operation of a live streamer of the live streaming room.

8. The method of claim 1, wherein the live streaming interface corresponds to a live streamer of the live streaming room, and the method further comprises:
providing, to the live streamer, a configuration interface associated with the target participant; and
obtaining, via the configuration interface, the configuration information input by the live streamer.

9. The method of claim 8, wherein the configuration interface comprises:
a first control for setting the target time period; and/or
a second control for setting the interaction objective.

10. The method of claim 9, wherein the configuration interface further comprises:
a third control for setting whether the target content area is highlighted in a live streaming program during the target time period.

11. The method of claim 1, further comprising:
presenting, based on a second predetermined operation associated with the target content area, historical interaction information associated with the target participant, the historical interaction information at least indicating a completion status of a historical interaction objective of the target participant in at least one historical time period.

12. The method of claim 1, further comprising:
extending, in response to the interaction objective being completed by the target participant within the target time period, a length of the target time period to cause the target participant to continue being an active user of the live streaming event.

13. The method of claim 12, wherein extending the length of the target time period comprises:
extending the length of the target time period based on first indication information from a live streamer of the live streaming room.

14. The method of claim 1, further comprising:
controlling, in response to the interaction objective being uncompleted by the target participant within the target time period, the target participant to exit the live streaming event.

15. The method of claim 14, wherein controlling the target participant to exit the live streaming event comprises:
controlling, based on second indication information from a live streamer of the live streaming room, the target participant to exit the live streaming event.

16. The method of claim 1, wherein the live streaming event comprises a co-streaming event associated with the plurality of participants.

17. An apparatus for live streaming interaction comprising
an interface presenting module, configured to present a live streaming interface of a live streaming room, the live streaming interface comprising a plurality of content areas, the plurality of content areas corresponding to a plurality of participants of a live streaming event associated with the live streaming room; and
an information presenting module, configured to present interaction information in association with a target content area in the plurality of content areas, the interaction information at least indicating a completion status of an interaction objective of a target participant corresponding to the target content area within a target time period, wherein the target time period and/or the interaction objective are determined based on configuration information of the live streaming room, and the interaction information is updated based on an interaction operation associated with the target participant.

18. An electronic device comprising:
at least one processing unit; and
at least one memory coupled to the at least one processing unit and storing instructions for execution by the at least one processing unit, the instructions, when executed by the at least one processing unit, cause the electronic device to perform the method of any of claims 1-16.

19. A computer-readable storage medium having stored thereon a computer program, the computer program, when executed by a processor, implements the method of any of claims 1-16.
